# EUROPEAN PATENT SPECIFICATION

(11) **EP 3 747 156 B1**
(45) Date of publication and mention of the grant of the patent: **05.04.2023**
(21) Application number: 18703530.8
(22) Date of filing: 29.01.2018
(51) Int. Cl.: H04L 41/0631, G06F 11/30, G06F 11/34, H04W 24/04, H04L 69/40

(54) **PROACTIVE FAULT MANAGEMENT IN SLICING-ENABLED COMMUNICATION NETWORKS**
PROAKTIVE FEHLERVERWALTUNG IN SLICING-FÄHIGEN KOMMUNIKATIONSNETZWERKEN
GESTION PROACTIVE D'ANOMALIES DANS DES RÉSEAUX DE COMMUNICATION EN TRANCHES

(43) Date of publication of application: 09.12.2020
(73) Proprietor: Nokia Solutions and Networks Oy, 02610 Espoo (FI)
(72) Inventor: ALI-TOLPPA, Janne Tapio, 82024 Taufkirchen (DE); NASEER-UL-ISLAM, Muhammad, 81737 Munich (DE); GAJIC, Borislava, 82008 Unterhaching (DE); MANNWEILER, Christian, 81737 Munich (DE)
(74) Representative: Nokia EPO representatives
(86) International application number: PCT/EP2018/052077
(87) International publication number: WO 2019/145049

(56) References cited:
- WO-A1-2012/116716
- WO-A1-2015/070917
- US-A1- 2014 156 830
- "3rd Generation Partnership Project; Technical Specification Group Services and System Aspects; Telecommunication management; Study on management and orchestration of network slicing for next generation network (Release 14)", 3GPP STANDARD ; TECHNICAL REPORT ; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V1.0.0, 9 March 2017 (2017-03-09), pages 1-52, XP051290419, [retrieved on 2017-03-09]
- HUAWEI ET AL: "pCR 28.545 Add use case and requirements on alarm notification for network slicing", 3GPP DRAFT; S5-181175 PCR 28.545 ADD USE CASE AND REQUIREMENTS ON ALARM NOTIFICATION FOR NETWORK SLICING, 3RD GENERATION PARTNERSHIP PROJECT (3GPP), MOBILE COMPETENCE CENTRE ; 650, ROUTE DES LUCIOLES , vol. SA WG5, no. Rome, Italy; 20180129 - 20180202 19 January 2018 (2018-01-19), XP051391258, Retrieved from the Internet: URL:http://www.3gpp.org/ftp/tsg%5Fsa/WG5%5 FTM/TSGS5%5F117/Docs/ [retrieved on 2018-01-19]

## Description

### Field of the invention

The present invention relates to slicing-enabled communication networks, in particular to slicing-enabled mobile networks.

### Abbreviations

- 3GPP: 3^{rd} Generation Partnership Project
- 3G / 4G / 5G: 3^{rd} / 4^{th} / 5^{th} Generation
- CE: Coordination Engine
- CEP: Complex Event Processing
- CF: Cognitive Function
- CME: Configuration management Engine
- CN: Core Network
- CNM: Cognitive Network Management
- COTS: Commercially of the Shelf
- CRAN: Centralized RAN
- CSMF: Communication Service Management Function
- DAE: Decision and Action Engine
- EB: Event Bus
- EC: Event Correlation
- ECF: Event Correlation Function
- ECS: Event Correlation System
- EID: Event ID
- EMA: Environment Modelling & Abstraction
- eMBB: Enhanced Mobile BroadBand
- EN: Event Notification
- ENR: Event Notification Response
- ET: Event Type
- FM: Fault Management
- FMCF: Fault Management Cognitive Function
- FMCFID: FMCF ID
- FQDN: Fully-Qualified Distinguished Name
- ID: Identifier
- KPI: Key Performance Indicator
- MF: Management Function
- MFID: Management Function ID
- MLB: Mobility Load Balancing
- MO: Managed Object
- MRO: Mobility Robustness Optimization
- NE: Network Element
- NF: Network Function
- NM: Network Management
- NOM: Network Objectives Manager
- NS: Network Service
- NSI: Network Slice Instance
- NSI ID: Network Slice Instance Identifier
- NSMF: Network Slice Management Function
- NSSI: Network Slice Subnet Instance
- NSSMF: Network Slice Subnet Management Function
- OAM: Operation, Administration, and Management
- PHY: Physical (layer)
- RAN: Radio Access Network
- RepMFID: Reporting MF ID
- RespMFID: Responding MF ID
- SLA: Service Level Agreement
- SON: Self-Organizing Networks
- TN: Transport Network
- TR: Technical Report
- TS: Technical Specification
- URLLC: Ultra-Reliable Low-Latency Communication
- VIC: Virtual Infrastructure Container
- WiFi: Wireless Fidelity

### Background of the invention

This application relates to management of the Network Slice Instances (NSIs) and the Network Slice Subnet Instances (NSSIs) (see 3GPP TR 28.801 v1.2.0 [1]), especially focusing on the troubleshooting aspects but not excluding other aspects such as preventive maintenance and preventive configuration. The network slice subnet instances are building blocks of the network slice instances. A network slice subnet instance is built upon network functions and resources and it can be associated either with only one network slice instance or with multiple network slice instances, i.e. the network slice subnet instance can be shared among multiple network slice instances.

The Network Slice Management Function (NSMF) is responsible for managing a single or multiple network slice instances. In addition, NSMF has the information on the relation between network slice instances and network slice subnet instances, i.e. which network slice subnet instances are associated to which network slice instance. Similarly, Network Slice Subnet Management Functions (NSSMFs) are responsible for managing a single or multiple NSSIs. The NSMF monitors the status of the associated NSI. Once the fault in operation is detected the NSMF or NSSMF initiate the healing procedure for the affected NSI and/or NSSI. The automated healing can be triggered by NSSMF or NSMF (on NSSI and NSI level respectively). E.g. either the NSSMF triggers the automated healing for the NSSI based on pre-configured automated healing policies received from NSMF or the NSMF itself triggers the healing actions on the NSSI, which will be performed by the corresponding NSSMF.

In legacy networks, the network faults are handled with the help of Self-Organizing Network (SON) solutions [2], in particular self-healing solutions comprising the techniques for coping with the outages on the level of individual network cells, including outage detection, root cause analysis and fault mitigation. The SON management allows a modification of some parameters of a SON function such that the behavior of the behaviour of the SON algorithm can be slightly modified (and thereby its effects on the network configuration), the SON algorithm as such (including the algorithm inherent state machine and state transitions) remains unchanged. More sophisticated adaptations of the SON algorithms therefore need to be done manually through the SON function manufacturer.

The concept of Cognitive Network Management proposes a framework for enabling flexibility and adaptability of SON functions based on network context. Such flexible SON functions are called Cognitive Functions (CFs). A specific type of such Cognitive Functions focusing on troubleshooting of a network slice instance, network slice subnet instance or its individual network functions and deployment layers is called Fault Management Cognitive Functions (FMCFs).

Event Correlation Systems (ECSs) analyse a large number of events and, thus, pinpoint the few events that are really important in that mass of information. This is accomplished by looking for and analysing relationships between events. In Network Management (NM) such correlating often means correlating alarm events raised by different Network Elements (NEs). Therefore, it is often referred to as alarm correlation. However, also other events may be correlated such as, for example, anomalies detected by an anomaly detection function. Complex event processing (CEP) is event processing that combines data from multiple sources to infer events or patterns that suggest more complicated circumstances. This may be used to improve the quality of anomaly diagnoses in self-healing functions, for example.

Self-Organizing Network (SON) self-healing solutions are used in legacy networks for handling the outages on the level of individual network elements. Self-healing corrective actions are performed after the outage detection and root cause analysis. Different SON instances (e.g. MRO, MLB etc.) could also be active at the same time and perform the actions corresponding to their scope (e.g. handover optimization, balancing of traffic load). In order to avoid conflicting decisions and reconfigurations, the coordination and verification of actions from different SON instances is necessary. The SON coordinator concept aims at resolving the potential conflicts that are known beforehand based on the behaviour of individual SON functions, whereas the SON verification aims at monitoring the network performance after the SON changes have taken place in order to induce the actual effects of the SON actions and to potentially roll them back (if the caused effects are negative) [4].

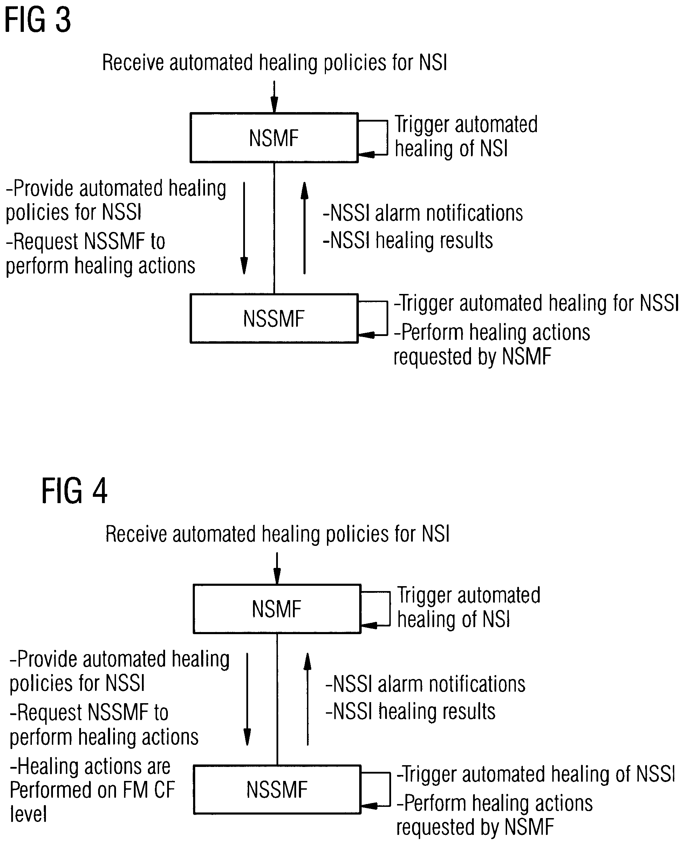

3GPP TR 28.801 [1] describes controlling of automated healing in a sliced network, as depicted in Fig. 3. The NSMF monitors the status of the associated single or multiple NSIs. NSSMFs are responsible for management of the associated NSSIs.

According to 3GPP TS32.111 [3], an alarm signifies an undesired condition of a resource (e.g. network element, link) for which an operator action is typically required. An alarm has a state such as an administrative state and/or an operational state. An event is a network occurrence which has significance for the management of an NE. Events do not have a state. Thus, an alarm is not an event. However, a change of a state of an alarm or a notification of a state of an alarm or of a change of a state of an alarm ("alarm notification") may be considered as an event. Prior art document WO 2012/116716 A1 discloses a technique for determining a correlation among events occurring in one or more network elements. The correlation among the events results from a propagation of a root event through communication entities of the one or more network elements.

### References:

[1] 3GPP TR 28.801 v1.2.0 (2017-05) "Study on management and orchestration of network slicing for next generation network"
[2] S. Hämäläinen, H. Sanneck, C. Sartori, "LTE Self-Organising Networks (SON): Network Management Automation for Operational Efficiency," John Wiley and Sons, Dec. 2011.
[3] 3GPP TS32.111 v14.0.0 (2017-03)
[4] J. Ali-Tolppa, T. Tsvetkov "Optimistic concurrency control in self-organizing networks using automatic coordination and verification", NOMS 2016
[5] Guofei Jiang, George Cybenko "Temporal and Spatial Distributed Event Correlation for Network Security", American Control Conference, 2004

### Summary of the invention

It is an object of the present invention to improve the prior art.

According to a first aspect of the invention, there is provided an apparatus, comprising a first monitoring unit configured to monitor if a notification of a first event from a first network resource is received; a first managing unit configured to manage the first network resource based on the first event if the first monitoring unit monitors that the notification of the first event is received; a second monitoring unit configured to monitor if a notification of a root event from a second network resource different from the first network resource is received; a second managing unit configured to manage the second network resource based on the root event if the second monitoring unit monitors that the notification of the root event is received; a forwarding unit configured to forward the notification of the root event to the first network resource if the second monitoring unit monitors that the notification of the root event is received.

According to a second aspect of the invention, there is provided an apparatus, comprising a first monitoring unit configured to monitor if a first instruction is received from a first management function; a second monitoring unit configured to monitor if a second instruction is received from a second management function different from the first management function; a managing unit configured to manage a first network resource based on the first instruction if the first instruction is received and based on the second instruction if the second instruction is received; an event monitoring unit configured to monitor if a notification of a root event is received from the second management function; a forwarding unit configured to forward the notification of the root event to the first management function if the notification of the root event is received from the second management function.

According to a third aspect of the invention, there is provided an apparatus, comprising a first monitoring unit configured to monitor if a notification of a first event related to a first network resource is received and to monitor if a notification of a root event related to a second network resource is received; a first managing unit configured to manage the first network resource based on the first event if the first monitoring unit monitors that the notification of the first event is received; wherein the second network resource is different from the first network resource; the first managing unit is configured to manage the first network resource based on the root event if the first monitoring unit monitors that the notification of the root event is received; the first managing unit is not configured to manage the second network resource.

According to a fourth aspect of the invention, there is provided a method, comprising monitoring if a notification of a first event from a first network resource is received; managing the first network resource based on the first event if the first monitoring unit monitors that the notification of the first event is received; monitoring if a notification of a root event from a second network resource different from the first network resource is received; managing the second network resource based on the root event if the second monitoring unit monitors that the notification of the root event is received; forwarding the notification of the root event to the first network resource if it is monitored that the notification of the root event is received.

According to a fifth aspect of the invention, there is provided a method, comprising monitoring if a first instruction is received from a first management function; monitoring if a second instruction is received from a second management function different from the first management function; managing a first network resource based on the first instruction if the first instruction is received and based on the second instruction if the second instruction is received; monitoring if a notification of a root event is received from the second management function; forwarding the notification of the root event to the first management function if the notification of the root event is received from the second management function.

According to a sixth mode of the invention, there is provided a method, comprising monitoring if a notification of a first event related to a first network resource is received and monitoring if a notification of a root event related to a second network resource is received; managing, by a first managing unit, the first network resource based on the first event if it is monitored that the notification of the first event is received; wherein the second network resource is different from the first network resource; the first network resource is managed by the first managing unit based on the root event if it is monitored that the notification of the root event is received; the first managing unit does not manage the second network resource.

According to a seventh mode of the invention, there is provided a computer program product comprising a set of instructions which, when executed on an apparatus, is configured to cause the apparatus to carry out the method according to any of the fourth to sixth aspects. The computer program product may be embodied as a computer-readable medium or directly loadable into a computer.

Each of the methods of the fourth to sixth aspects may be a method of fault management.

Further details are outlined in the respective dependent claims.

According to some embodiments of the invention, at least one of the following advantages may be achieved:
- Root-cause analysis in slicing-enabled networks is enabled, in particular in slicing-enabled networks, where there is no single management function, either NSSMF or NSMF, that would manage the complete system;
- Conflicting configuration activities may be avoided; in particular, ping-pong configuration activities may be avoided.

In detail, utilizing the ENs, ENRs and ECFs, FMCFs in a slicing-enabled communication network, the network is able to exchange events between FMCFs that are located in different NSMFs or NSSMFs, even if those are operated by separate organizations. This way the FMCFs may receive events from all of their relevant dependencies -- including also transitional dependencies -- even when there is no one single management function that would have visibility over the whole deployment. The events may be correlated to create complex events, in order to better describe the state of the environment they operate in and improve the quality of the self-healing diagnoses done by the FMCFs. Additionally, correlating the temporal context of events from separate management functions enables faster, pro-active self-healing in complex, slicing-enabled network deployments.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows multiplicity of management entities in a slice-enabled network (e.g. a communication network such as a mobile network);
Fig. 2 shows an example network comprising three NSSI and three NSI;
Fig. 3 shows controlling of automated healing of an NSI, based on 3GPP TR 28.801 [1];
Fig. 4 shows controlling of automated healing of an NSI according to some embodiments of the invention;
Fig. 5 shows event correlation connections between the FMCFs deployed in different NSMFs and NSSMFs of the example network of Fig. 2 according to some embodiments of the invention;
Fig. 6 shows a message flow according to some embodiments of the invention;
Fig. 7 shows a message flow according to some embodiments of the invention;
Fig. 8 shows an apparatus according to an embodiment of the invention;
Fig. 9 shows a method according to an embodiment of the invention;
Fig. 10 shows an apparatus according to an embodiment of the invention;
Fig. 11 shows a method according to an embodiment of the invention;
Fig. 12 shows an apparatus according to an embodiment of the invention;
Fig. 13 shows a method according to an embodiment of the invention;
Fig. 14 shows an apparatus according to an embodiment of the invention;
Fig. 15 shows cognitive Network Management building blocks;
Fig. 16 shows extensions over the controlling of automated healing of an NSI according to Fig. 3;
Fig. 17 shows in
   a) Layered view of network function/service implementation in virtualized environment and corresponding FMCF.
   b) possible mapping of FMCFs to corresponding network function and infrastructure components and layers,
   c) layer-specific FMCFs deployed on dedicated layers of the infrastructure
Fig. 18 shows mapping of FMCFs to NFs and infrastructure components and layers where more isolation is possible on functional and virtual infrastructure layer;
Fig. 19 shows mapping of FMCFs to NFs and infrastructure components and layers where more isolation is possible on functional, virtual and physical infrastructure layer
Fig. 20 shows interfaces between building blocks of CNM system; and
Fig. 21 interfaces between building blocks of CNM system for enabling the realization of FMCFs system.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

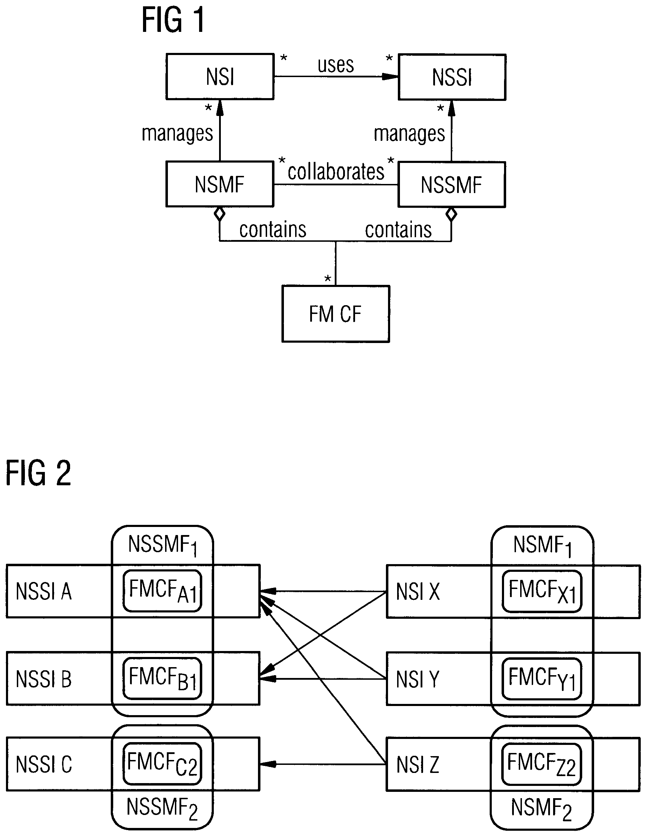

As the NSSIs can be shared among multiple NSIs, there might be conflicting requests of self-healing of the NSSI. The NSSMF needs to coordinate, prevent or resolve such conflicting actions. That is, in a deployment of network slicing with shared NSSI, it may be that neither NSMFs nor NSSMFs have a full visibility over the deployed network(s), since there may be a many-to-many-relationship between NSSMFs and NSMFs, as shown in Fig. 1. This can be e.g. due to multi-tenancy, network sharing etc., when different NSls sharing the same NSSI are managed by different NSMFs. In Fig. 1, * means an arbitrary number including 0, and the rhombus means that FMFC is contained in the NSMF (NSSMF).

An example network is shown in Fig. 2. Fig 2 shows a network comprising three NSSIs and three NSIs. Each of them has a FMCF ensuring self-healing capabilities. Note that not all NSSIs are managed by the same NSSMF and not all NSls by the same NSMF. Also note that this picture serves as an example and for example FMCFs need not necessarily be assigned to one NSSI or NSI within a NSSMF or NSMF, respectively, but may be placed with different scopes.

Now, let's consider the following scenario:
1. There is a reconfiguration or a change in the environment (context) in NSSI C managed by NSSMF₂, which has a negative impact on the end-to-end service quality in NSI Z
2. The self-healing function of FMCF_{Z2} in NSMF₂ reacts to the observed degradation by requesting a reconfiguration in NSSI A from the NSSMF, (from FMCF_{Z2} perspective, i.e., e2e NSI perspective, this might be a more meaningful action than reverting NSSI C to the original configuration)
3. The configuration change in NSSI A causes a degradation detected by the FMCFₓ₁ in NSI X

When the FMCFₓ₁ in NSMF, attempts to do a root cause analysis of the detected problem, it is unable to detect the root cause due to the transitive nature of the event. The original change that led to the degradation in NSI X occurred in NSSI C that NSI X does not depend on. Furthermore, NSMF, may not even be aware of NSMF₂ and NSSMF₂ functions, where the problem originated, since it has no direct dependency to either one. NSSMF, is also unable to handle the problem, since the root cause is in a NSSI not managed by it.

Similarly, as an example, let's imagine that a change in the usage of the service provided by NSI Z may lead to an event or a problem in NSSI A, which again may often lead to a degradation in the service provided by NSI X. Now, since NSI X may not be aware of the transitive dependency it has to NSI Z (managed by a different NSMF) via the shared NSSI A, it won't be able to anticipate the problem before it occurs in the service provided by NSI X.

Additionally, due to the nature of virtualized environment that enables high resource multiplexing in general it is expected to have mutual dependencies between various NSSIs and NSIs, i.e. sharing of NSSIs among different slices will be a very common case. Therefore, there is a high probability that the network management will often face the problem where re-configuration of one NSSI will affect possibly multiple NSIs and associated NSSIs, i.e. "chain reaction" in propagation of effects among NSSIs. On the other side, without having a full visibility of the network deployment, course of events in the effect propagation as well as the actual root cause, the individual management entities might attempt to "undo" some of the re-configurations on NSSIs that were performed by another management entity as a remedy to undesired effects.

In the example shown in Fig. 1 and explained hereinabove, if the NSMF, is unable to detect the actual root cause of the problem and the course of re-configuration events that followed, it may attempt to undo the re-configurations done in NSSI A. Thus, it creates a "ping-pong" effect, i.e. bouncing back the actual problem. On the other hand, by re-configuring the NSSI-B it might prolong the chain reaction and propagate further the effects of the original problem. Both effects should be minimized as they might have negative influence (or at least an unpredictable influence) on the network performance.

In more complex sliced network deployments, where there are transitive dependencies between NSSIs and NSIs managed by separate NSSMFs and NSMFs, respectively, which may be operated even by different organizations, there can be no one single network management function that would have an overview of the complete network with all its dependencies. Therefore, there can be no single function that can manage the dependencies between the FMCFs in them. However, for cognitive self-healing use cases such wider view is necessary.

In legacy networks there are no mutual dependencies as described hereinabove. The self-healing as well as SON coordination and verification entities have an overall picture of the network. This is not the case in virtualized environment and 5G slicing context, which sets significant limitations for the diagnosis in self-healing and SON coordination in such deployments.

Namely, because of the possible many-to-many relationship between NSMF and NSSMF instances managing the NSls and NSSIs, respectively, none of the components might not have a complete picture of the network, which may often be required for a diagnosis of a network problem.

Additionally, due to the fact that the NSSIs can be shared among multiple NSls, conflicting requests for self-healing on the NSSI level can occur. 3GPP TR 28.801 [1] states that the NSSMF needs to coordinate, prevent or resolve such conflicting actions, but does not provide any information on how this should be actually done.

According to some embodiments of this invention, it is ensured that a management function (such as NSMF, in Fig. 2) gets notified on events relevant for NSI(s) and NSSI(s) managed by the management function although the management function itself does not manage the NSI or NSSI (such as NSSI C in Fig. 2) where the event occurs.

From a logical point of view, in some embodiments of the invention, Event Notifications (ENs) and Event Notification Responses (ENRs) may be bi-directionally exchanged between any NSMF and NSSMF instances. This is an extension of the alarm notification and healing result interfaces of 3GPP TR 28.801 [1]. The NSMF and NSSMF may have Fault Management Cognitive Functions (FMCFs). In addition, the FMCFs may utilize a distributed Event Correlation Function (ECF) to correlate events over all related FMCFs in different management functions for early problem detection, troubleshooting and self-healing.

These functions are shown in Fig. 4, which corresponds to Fig. 3 and shows additionally the extensions over the conventionally known control of automated healing of an NSI. In Fig. 4, NSMF provides to NSSMF not only healing policies and requests to perform healing actions, and NSSMF provides to NSMF not only on alarm notifications and healing results, as in Fig. 3. In addition, both NSSMF and NSMF provide event notifications to the other management function. The event notifications transmitted between NSSMF and NSMF in either direction may originate from a respective managed NSI and managed NSSI, respectively, or from another management function such as another NSSMF or another NSMF.

In Fig. 4, each management function (NSMF and NSSMF) comprises a Fault Management Cognitive Function FMCF. However, instead of the FMCF, it may comprise a conventional Fault Management Function. The Event Correlation Function ECF may be used to correlate different events such as those received from the managed network resource (NSI and NSSI for NSMF and NSSMF, respectively) with those received from the other management function (NSSMF and NSMF, respectively). The Event Correlation Function ECF is optional.

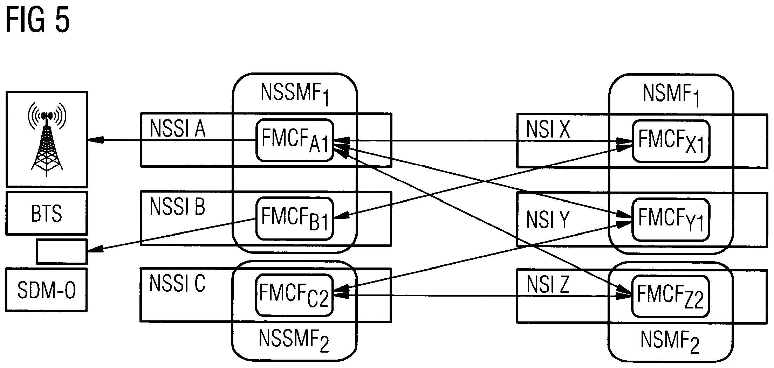

Figs. 5, 6, and 7 show realizations of this principle.

Fig. 5 shows the same example network as in Figure 2, but this time with sharing of ENs between related FMCFs in separate NSMF and NSSMF instances. That is, FMCF_{Z2} may forward event notifications received from FMCF_{C2} to FMCF_{A1}. This forwarding is conventionally not known because FMCF_{Z2} manages NSSI A via FMCF_{A1} such that conventionally notifications are sent from FMCF_{A1} to FMCF_{z2} only. Furthermore, FMCF_{A1} may forward event notifications it receives from FMCF_{Z2} to FMCF_{X1}. This forwarding is conventionally not known either because FMCF_{X1} does not manage FMCF_{Z2}, such that conventionally FMCF_{X1} is not interested in notifications from FMCF_{Z2}. Thus, FMCF_{X1} gets informed of the reconfiguration of NSSI C as a root cause of the degradation in NSSI A, and can manage NSSI A taking into account this knowledge.

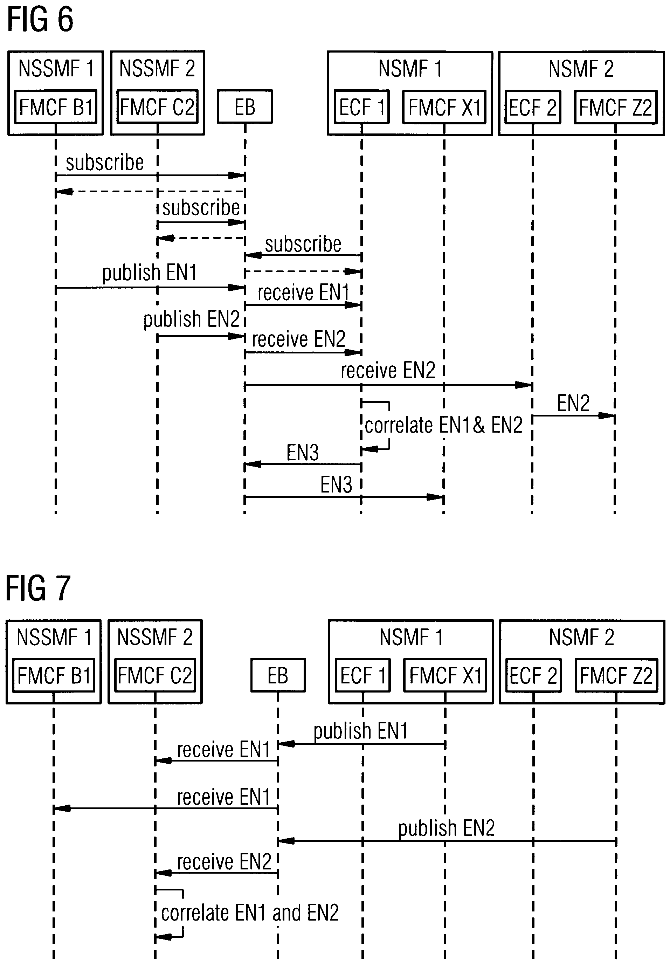

Fig. 6 shows an example of an event flow using a publish-subscribe mechanism and an Event Bus (EB) for distributing the ENs between FMCFs managed by different NSMFs and NSSMFs according to some embodiments of the invention. Using the same example sliced network as in Fig. 2, NSMF, implements an ECF₁, which is used by all FMCFs in NSMF1. It therefore subscribes to all events reported from NSSMF, and NSSMF₂ and correlates them. When two events are detected by FMCF_{B1} and FMCF_{C2}, they are published to the EB and received by ECF₁. Then, ECF₁ detects that the reported events are related and creates a new complex event EN3 representing this correlation and causality (if applicable). The complex event EN3 will be received by FMCF X1, which has subscribed to events from the ECF1 earlier. Since NSMF₂ doesn't have any dependencies to NSSI_{B} or FMCF_{B1}, it hasn't subscribed to events from it. In Fig. 6, dashed arrows indicate event notification responses (optional).

Figure 7 shows an example of the similar event processing and correlation for events created by NSIs according to some embodiments of the invention. Note that both directions of event propagation may be combined and correlated in one scenario. In this example, the correlation functionality is built in the FMCF_{C2} and there is no external ECF.

In the embodiments of Figs. 6 and 7, the EB is depicted outside the NSSMFs and NSMF as a "global" component. It could be also implemented, for example, within the NSSMF. In this case, if an NSI uses NSSIs managed by separate NSSMFs, the NSMF and ECFs and FMCFs in it may need to subscribe to several EB instances for the ENs. Logically, however, the picture remains the same.

Since an EN may contain a list of events that the reporting FMCF has correlated with the reported event, including their causality rank, the receiving FMCFs (or ECFs) may use this information to update their EN subscription. They may, for example, subscribe to receive events from FMCFs with which they have only transitive dependencies, in order to receive an earlier warning for potential problems. This can be elaborated with the following example:
1. An unusually high number of application X users detected in cell C (context=NSMF, slice=eMBB)
2. Either statistical correlation or correlation rules show that event 1 often occurs together with event "High usage of resource R" in Edge Cloud (EC1) responsible for Centralized-RAN (CRAN) processing of cell C (context=NSSMF, shared NSSI)
3. Another, possibly statistically learned, rule states that "High usage of resource R" often occurs with a problem event in a low-latency application requiring the same edge cloud for its own computations (context=NSMF, slice=URLLC)
4. When event 2 is detected and sent to FMCFs in NSMF of the URLLC slice of step 3, it may contain the event of step 1 as a correlated event with a lower causality rank (meaning it is the root cause). Causal reasoning in the URLLC FMCF can deduct that original root cause is the enclosed event from step 1, subscribe to those events directly and in the future take action to avoid the problem or request the NSSI to react, when similar event from step 1 first occurs.

The event correlation itself may be either deterministic based on codebooks or probabilistic, as described for example in [5]. Also, the temporal scope may be included. When correlating events from different kinds of domains (NSI, NSSI), rules may be included to determine, which Managed Objects are related. Also, significantly different timeframes and granularity periods may require special handling.

According to some embodiments of this invention, the aforementioned problem of interdependencies between MOs and corresponding "chain reaction" and "ping-pong" effects in event propagation are solved. As stated before, both effects of long propagation of re-configuration effects as well as undo actions of already re-configured MOs without having a clear overall picture of MOs, corresponding management functions and their inter-dependencies might have negative impacts on network performance. Correct and fast identification of the root cause of the degradation and performing corresponding corrective actions are achieved, e.g. re-configuration directly on the root cause MO. However, due to many to many relations between MOs, NSSI, NSIs and their management functions this might not be always possible. In such cases, some embodiments of this invention aim at coordination between FMCFs and their corrective actions in order to minimize the impact on those MOs and functions that have the most dependencies as indicated by the event correlation performed by ECF. There can be different options for achieving a minimized impact. E.g. re-configurations on dedicated NSSIs should be prioritized over re-configuration of shared NSSIs, or re-configuration of the MOs that have the least number of dependencies with other MOs (e.g. are shared less among NSIs) should be prioritized, etc. However, it is extremely useful for achieving such coordination and intelligent reaction on events in the network to have a more complete picture of actual network deployment, corresponding management entities, and their interdependencies. This is supported according to some embodiments of the invention.

In general, some embodiments of the invention may comprise a network slicing capable communication network (such as a mobile network comprising Radio Access Network (RAN), Core Network (CN), Transport Network (TN) functionality or a part thereof), as well as a network management and orchestration system, performing part of mobile network functionality.

The Fault Management may be performed in a modular/distributed slice-aware way through a set of Fault Management Functions (in particular: Fault Management Cognitive Functions (FMCFs)) which have one or more of the following capabilities:
- Configuration, Performance and Fault Management data collection and processing
- Anomaly detection (targeting also anomaly prediction)
- Anomaly diagnosis, localization and root cause analysis
- Fault isolation and recovery/healing.

The Fault Management of a network slice may consist of several Fault Management Functions (e.g. FMCFs) that are placed in a combination of different:
- Management contexts: NSSMFs and NSMF managing the NSSIs and NSI required to implement the service, respectively
   ∘ An FMCF in a NSSMF may have dependencies to other FMCFs in more than one NSMF, in case the NSSI it is managing is shared by more than one NSI
- Management domains: network, infrastructure (orchestration) or QoS management
- Layers: E.g. physical or virtual layers
- Network functions, e.g. control plane and user plane network functions.

The FMCFs may send an Event Notification (EN), which may include for example, but not limited to:
- ID of the reporting management function (instance ID of, for example, either NSSMF or NSMF) (MFID)
- A unique Event Identifier (EID) within the reporting management function
- NSI ID or 'ALL' for non-slice-specific events detected by NSSMF
- ID of the reporting FMCF (FMCFID)
- The Managed Object (MO) Fully-Qualified Distinguished Name (FQDN)
   ∘ Note that these can be different types of objects on NSSI or NSI level
- Timestamp of the event
- Event Type (ET) (for example, but not limited to: alarm type, anomaly root cause label)
- Event Lifecycle, which may contain for example but not limited to
   ∘ New event
   ∘ End of event
- An indicator, if the reporting FMCF is acting on the event (for coordination purposes)
- Reliability of the diagnosis (Optional)
- Free text (optional, for logging purposes etc.)
- List of correlated ENs the reporting FMCF diagnosed to be related to this event with their correlation metric or causality rank (optional)

The distribution of Event Notifications may be either push or pull based. In the latter case a message bus and a publish-subscribe model may be used. Typically, the impact area monitored by an individual FMCF may be limited only to the most related FMCFs. However, using the publish-subscribe model the impact area can be extended as needed. For example, depending on the location of the FMCF which sends the Event Notification the impact area can typically be e.g.:
- If the EN is distributed by a **FMCF in NSSI** (e.g. of NSSI C FMCF_{C2} in Fig. 5) the impact area may comprise of:
   ∘ all remaining FMCFs of that NSSI
   ∘ all FMCFs in directly associated NSls to that NSSI (e.g. FMCF_{z2})
   ∘ all FMCFs in NSSIs that are building blocks of the directly associated NSI (e.g. FMCF_{A1}) - indirect association between NSSIs
- If the EN is distributed by a **FM in NSI** (e.g. of NSI X FMCFₓ₁ in Fig. 5) the impact area may comprise of:
   ∘ all remaining FMCFs of that NSI
   ∘ all FMCFs in NSSIs that are building blocks of that NSI (e.g. FMCF_{A1}, FMCF_{B1})
   ∘ all FMCFs in NSIs that are sharing (directly associated to) building blocks NSSIs (e.g. FMCF_{Z2}, FMCF_{Y1}) - indirect association between NSIs.

A FMCF receiving a EN may provide an optional Event Notification Response (ENR) to the EN, which may include for example but not limited to
- ID of the responding management function (RespMFID)
- ID of the original reporting management function (RepMFID)
- EID of the event in reporting management function received in the EN
- Indication, if the receiving FMCF has also a fix for the issue.

The FMCFs may utilize a distributed Event Correlation Function (ECF), which can detect related events reported by other FMCFs in different NSMFs or NSSMFs including causality and temporal context
- A FMCF may implement its own ECF or one ECF instance may be shared by several or all FMCFs managed by the same NSMF or NSSMF
- ECF may be used for
   ∘ Complex Event Processing (CEP), i.e. diagnosing events with a wider context and being able to diagnose and react to problems better in scope of self-healing in slicing-enabled networks
   ∘ Filtering of related and reflected events, thus reducing the number of events reported for the same root cause

The FMCFs may coordinate their corrective actions such that they minimize the impact on those MOs and functions that have the most dependencies as indicated by the event correlation. As an example, corrective actions on a NSSI dedicated to a single NSI are preferred over changes in a shared NSSI.

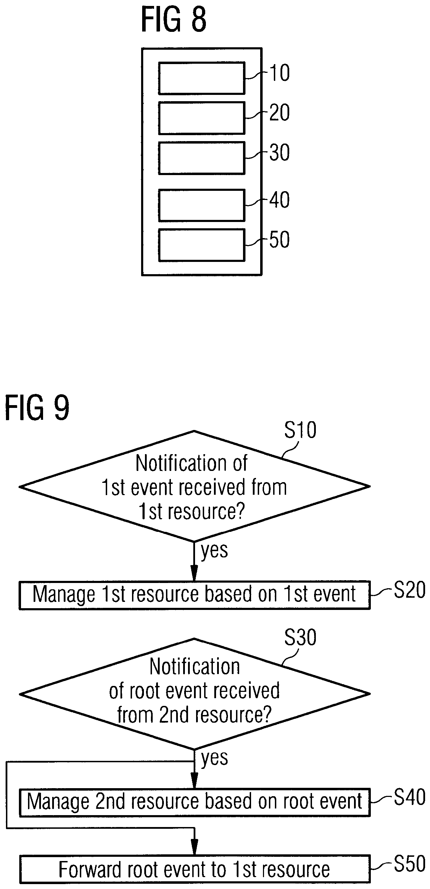

Fig. 8 shows an apparatus according to an embodiment of the invention. The apparatus may be a Fault Management Function such as a FMCF or an element thereof. Fig. 9 shows a method according to an embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises first monitoring unit 10, first managing unit 20, second monitoring unit 30, second managing unit 40, and forwarding unit 50. Each of the first monitoring unit 10, first managing unit 20, second monitoring unit 30, second managing unit 40, and forwarding unit 50 may be a first monitor, first manager, second monitor, second manager, and forwarder, respectively. Each of first monitoring unit 10, first managing unit 20, second monitoring unit 30, second managing unit 40, and forwarding unit 50 may be a first monitoring processor, first managing processor, second monitoring processor, second managing processor, and forwarding processor, respectively.

The first monitoring unit 10 monitors if a notification of a first event from a first network resource is received (S10). If the first monitoring unit 10 monitors that the notification of the first event is received (S10 = "yes"), the first managing unit 20 manages the first network resource based on the first event (S20).

The second monitoring unit 30 monitors if a notification of a root event from a second network resource is received (S30). The second network resource is different from the first network resource. If the second monitoring unit 30 monitors that the notification of the root event is received (S30 = "yes"), the second managing unit 40 manages the second network resource based on the root event (S40).

If the second monitoring unit 30 monitors that the notification of the root event is received (S30 = "yes"), the forwarding unit 50 forwards the notification of the root event to the first network resource.

The pair of S10 and S20, the pair of S30 and S40, and the pair S30 and S50 may be performed in an arbitrary sequence. They may be performed fully or partly in parallel.

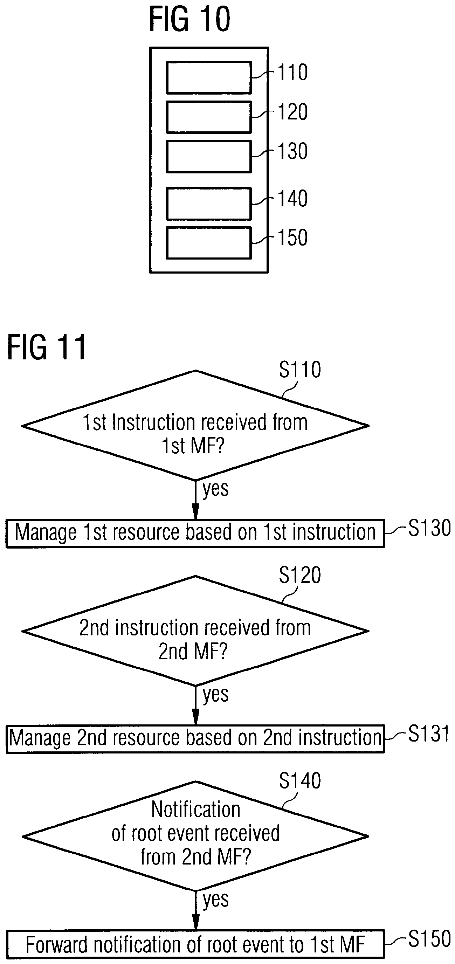

Fig. 10 shows an apparatus according to an embodiment of the invention. The apparatus may be a Fault Management Function such as a FMCF or an element thereof. Fig. 11 shows a method according to an embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises first monitoring unit 110, second monitoring unit 120, managing unit 130, event monitoring unit 140, and forwarding unit 150. Each of the first monitoring unit 110, second monitoring unit 120, managing unit 130, event monitoring unit 140, and forwarding unit 150 may be a first monitor, second monitor, manager, third monitor, and forwarder, respectively. Each of first monitoring unit 110, second monitoring unit 120, managing unit 130, event monitoring unit 140, and forwarding unit 150 may be a first monitoring processor, second monitoring processor, managing processor, third monitoring processor, and forwarding processor, respectively.

The first monitoring unit 110 monitors if a first instruction is received from a first management function (S110). If the first instruction is received (S110 = "yes"), the managing unit 130 manages the first network resource based on the first instruction.

The second monitoring unit 120 monitors if a second instruction is received from a second management function (S120). If the first instruction is received (S120 = "yes"), the managing unit 130 manages the first network resource based on the second instruction (S131). The second management function is different from the first management function.

The event monitoring unit 140 monitors if a notification of a root event is received from the second management function (S140). If the notification of the root event is received from the second management function (S140 = "yes"), the forwarding unit 150 forwards the notification of the root event to the first management function (S150).

The pair of S110 and S130, the pair of S120 and S131, and the pair of S140 and S150 may be performed in an arbitrary sequence. They may be performed fully or partly in parallel.

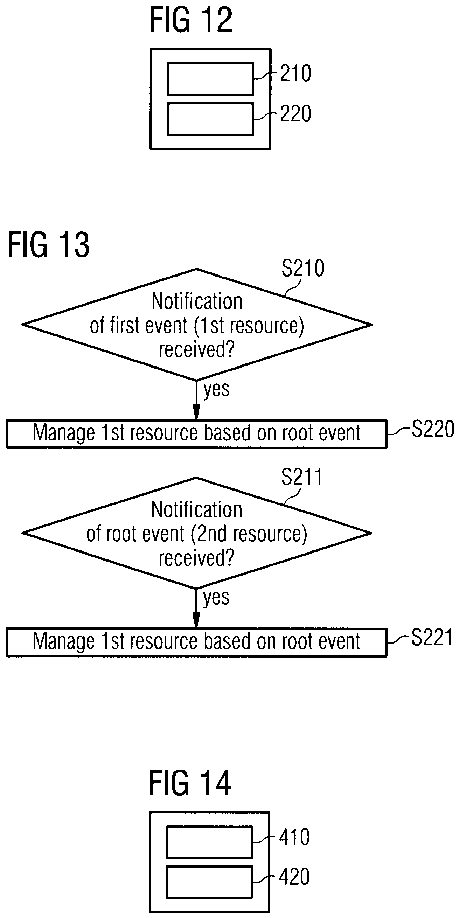

Fig. 12 shows an apparatus according to an embodiment of the invention. The apparatus may be a Fault Management Function such as a FMCF or an element thereof. Fig. 13 shows a method according to an embodiment of the invention. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises monitoring unit 210 and managing unit 22. Each of the monitoring unit 210 and managing unit 220 may be a monitor and a manager, respectively. Each of monitoring unit 210 and managing unit 220 may be a monitoring processor and managing processor, respectively.

The monitoring unit 210 monitors if a notification of a first event related to a first network resource is received (S210). If the notification of the first event is received (S210 = "yes"), the managing unit 220 manages the first network resource based on the first event (S220).

The monitoring unit 210 further monitors if a notification of a root event is received (S211). The root event is related to a second network resource different from the first network resource. If the notification of the root event is received (S211 = "yes"), the managing unit 220 manages the first network resource based on the root event (S221). The managing unit 220 is not configured to manage the second network resource, neither directly nor indirectly via another management function.

The pair of S210 and S220, and the pair of S211 and S221 may be performed in an arbitrary sequence. They may be performed fully or partly in parallel.

Fig. 14 shows an apparatus according to an embodiment of the invention. The apparatus comprises at least one processor 410, at least one memory 420 including computer program code, and the at least one processor 410, with the at least one memory 420 and the computer program code, being arranged to cause the apparatus to at least perform at least one of the methods according to Figs. 9, 11, and 13.

Embodiments of the invention are described for mobile networks such as 3G networks, 4G networks, 5G networks, WiFi networks etc.. However, the invention is not restricted to mobile networks and may be employed in fixed networks, too.

Embodiments of the invention are described for network slices and network slice subnets as network entities. However, embodiments of the invention may be employed for other kinds of networks such as networks with conventional network elements having a dedicated hardware for each function or a group of functions. Hybrid networks of slices, slice subnets, and conventional network elements are included, too. Any virtualization is not needed. In the context of the present application, NSIs, NSSIs, and conventional network elements may be named network resources.

The network resources may be arranged in an arbitrary number of hierarchical levels. For example, in the examples explained hereinabove, there are two hierarchical levels: network slice and network slice subnet, wherein a network slice uses a network slice subnet. However, the network slice may be used by another (higher level) network slice such that the network slice functions as a network slice subnet in this context.

Embodiments of the invention are described, wherein the (fault) management function is a cognitive function. However, in some embodiments of the invention, some or all of the (fault) management functions may be conventional (fault) management functions.

Embodiments of the invention are particularly useful if a first management function does not manage a certain network resource, but events of this network resource may influence indirectly (via a management activity of a second management function) a network resource managed by the first management function. However, even if the first management function manages the network resource, too, and, thus, events of the network resource are conventionally notified to the first network resource, too, some embodiments of the invention achieve a technical object: Namely, in such embodiments, reliability of the event notification is increased due to redundant notification from the network resource to the first management system.

For example, assume in Fig. 2 that NSI X uses NSSI C, too. Thus, conventionally, FMCF_{C2} informs FMCF_{X1}, directly on the reconfiguration or the change in the environment of NSSI C. In addition, in some embodiments of the invention, FMCF_{C2} informs FMCF_{X1} on this event via FMCF_{Z2} and FMCF_{A1}. Hence, if FMCF_{X1} does not receive the direct event notification for some reason, it still receives the event notification on the indirect way and may react accordingly. In addition, if FMCF_{X1}, receives the event notification only once, it may understand that there is some problem on one of the event propagation paths and may raise a corresponding alarm.

Correspondingly, in some embodiments of the invention, event notifications may be provided both directly between different management functions and via an event bus. Thus, again, a higher reliability of the event notification may be achieved by redundancy.

Some embodiments of the invention provide a hybrid configuration, wherein some events from some network resources may be provided directly between management functions, and other events of the same network resources or events from other network resources may be provided via an event bus.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

According to the above description, it should thus be apparent that example embodiments of the present invention provide, for example, a system such as a slicing-enabled communication networks, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

Hereinafter, several implementation options of Fault Management are explained at greater detail. None of these options is essential for the present invention and other implementations of the present invention are conceivable. That is, the remainder of the description focuses on a specific aspect of the Network Management System namely Fault Management.

Fault Management enables the resiliency to network faults by constantly monitoring the network performance and acting (also proactively) to its degradation. With the emerge of 5G networks that broke up the monolithic implementation of network elements and brought more layered approach (physical, virtual, network function and network service layer) in the implementation of network elements, it has become more evident that Network Management along with its Fault management need to adapt to such new trends. Introduction of virtualized infrastructure into the 5G architecture has enabled more implementation flexibility and adaptability to changing user needs, but on the other hand it resulted in a more complex Network Management and consequently more complex Fault Management procedure of such layered implementation of network service. Different parts of the network service can encounter faults in their operation. Moreover, the cause of such failures can be in different part of the architecture, and on different layers. Furthermore, with advent of slicing concept there is clear need to adapt the network operation and management to the slice requirements and agreed SLAs with the tenant. Within slice-tailored network management, there is a strong demand for more slice-aware and intelligent fault management as well as self-healing. Such slice-aware fault management should provide the resilience to the network faults according to the slice requirements and as requested by the tenant, avoiding the overprovisioning and thus cost increase while fulfilling the targeted quality of service.

Hereinafter, it is described the design of Fault Management (FM) Cognitive Function. It furthermore analyses the different implementation options with respect to varying levels of centralization or distribution of FM Cognitive Functions.

The first step in terms of automating the OAM of mobile networks, and in particular, mobile radio networks, was the introduction of SON, which allows in particular the autonomic optimization of certain network configuration parameters based on measurements from the individual network elements. To enable a joint operation and configuration of a multitude of individually acting SON function instances, concepts for SON coordination and SON management have been introduced. However, a central problem of SON remains: while SON management allows a modification of some parameters of a SON function such that the behavior of the SON algorithm can be slightly modified (and thereby its effects on the network configuration), the SON algorithm as such (including the algorithm inherent state machine and state transitions) remains unchanged. More sophisticated adaptations of the SON algorithms therefore need to be done manually through the SON manufacturer.

The aim of CNM is to make the automation of OAM processes in mobile networks more flexible and adaptable to current network context. This is done by designing so-called cognitive functions (CF) in a way that their running algorithms can be adapted automatically based on the current network context. Furthermore, the distribution and/or centralization of CFs can be modified based on concrete use case. However, the CFs focus mainly on the automation of the configuration management. Furthermore, the slicing as one of the key enablers for multi-service and multi-tenant approach in 5G networks has not been considered in the design of CFs. Depending on the slice/tenant requirements and priorities, the CFs that target the FM aspects may be adapted and furthermore the interaction between them should be carefully designed. As the slicing concept implies adding much more dynamicity to the setup and operational phase, the Fault Management should adapt to such a dynamicity through applying the algorithms tailored to specific managed object and its requirements in the context of overall slice. Furthermore, in order to meet the stringent latency requirements, the troubleshooting should be done more locally/distributed, avoiding the case of transmission of all relevant data to hierarchically higher management entities and performing centralized data processing and troubleshooting. On the other hand, the virtualized environment which is assumed to be the baseline for implementation of 5G slices imposes different deployment layers that should be jointly treated by the Fault Management.

*In a summary: The need for flexibility and adaptability in automation of OAM processes has been clearly identified and the CNM builds the framework for fulfillment of this need. However, the Fault Management as an important use case of CNM has not been particularly considered, especially in the context of network slicing and dynamically adjusting of FM Cognitive Functions to the current slice and tenant requirements* as *well* as *multi-layered deployment of network functions in virtualized environment.*

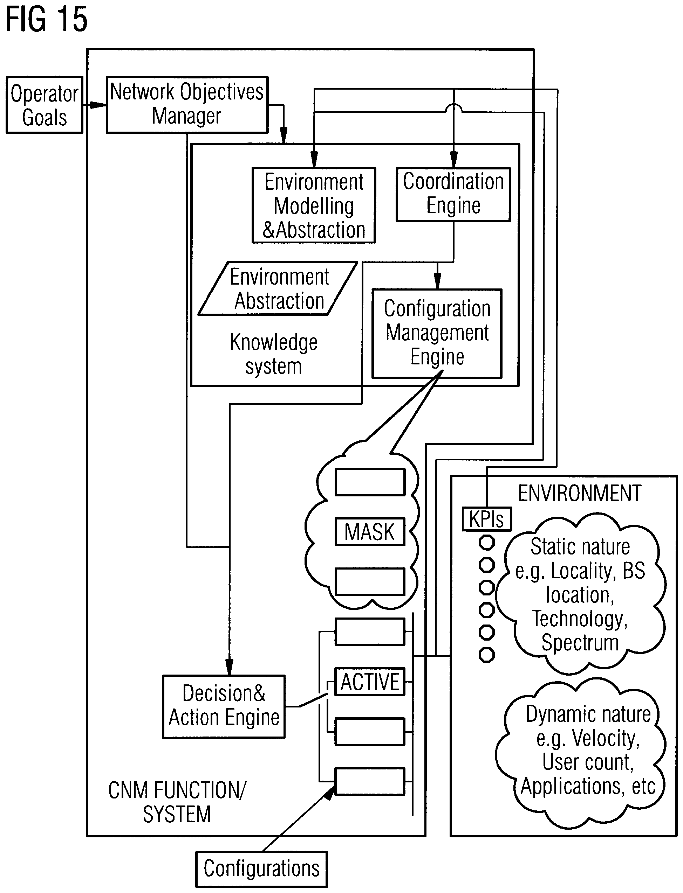

This fault management described hereinafter builds upon the concept of CNM (see Fig. 15) and focuses on slice-aware automatic fault management and self-healing aspects.

The main idea of CNM is to better extract the characteristics of the network environment so that it can decide on the most suitable configurations of network functions having in addition the information about current network states. The CFs of the CNM go beyond traditional SON solutions where each SON function merely matches combinations of KPls to pre-configured network constellations. In other words, the SON function having a set of possible network configurations choses one of them based on the input KPls.

Fault Management of a network slice is addressed in 3GPP TR 28.801 Rel 15 on the NSMF level, i.e. on the network management level of an entire slice instance. The FM information is collected from all network slice subnet instances NSSIs which take part in network slice instance NSI. The filtering of FM information on aggregated level (i.e. on NSI level) into the information relevant only to particular NSSI level is done by NSMF. For NSSIs shared across different NSls the NSMF will allow or suppress the FM information based on the FM requirements of the specific slice managed by NSMF.

In other words, the FM information is collected (and used) in slice-agnostic manner on slice-subnet level. Only at the NSMF level the slice-specific requirements are taken into consideration in FM data handling. Moreover, 3GPP TR 28.801 assumes that self-healing can happen either on NSI or NSSI level and it is driven by the self-healing policies as illustrated in Fig. 3. Further adaptation of self-healing process in terms of algorithms used and operational granularity is not considered.

Instead of considering the slice awareness only on higher management level (i.e. NSMF NSI level), some embodiments of this invention target more inherent slice-awareness of the Fault Management across the network slice by designing the slice-tailored Fault Management functions and mapping them to entire NSI or building blocks of the network slice, e.g. network slice subnet instances NSSIs, network function chains, individual network functions as well as individual deployment layers of network functions.

Some embodiments of this invention extend the notion of Cognitive functions (CF) by focusing mainly on the fault management aspects of the Cognitive Network Management. In other words, this invention proposes a notion of Fault Management CFs as a specific use case of a CF implementing the FM capabilities. The logic/algorithm and scope of operation of Fault Management Cognitive Function (FMCF) is determined by the slice characteristics/requirements along with SLAs agreed with the tenant. Some embodiments of the invention provide a slice-aware design of FMCFs in terms of their logic, i.e. algorithms/models that FMCFs are implementing, as well as in terms of mapping of the logic of FMCFs with their "domain of responsibility" from functional as well as infrastructure point of view. In other words, some embodiments of this invention provide adaptation of the FMCF logic based on the slice characteristics as well as the adaptation of its scope of operation in terms of the functions and infrastructure that it manages.

E.g., in the case of URLLC slice and some critical control function, one FMCF might be dedicated only to that single control NF implemented on a single VIC (Virtual Infrastructure Container, such as Virtual Machine or Docker Container) or physical server (so that fault localization and isolation/self-healing might be facilitated more swiftly), and it should be extremely reactive to any anomaly in the NF operation. On the other hand, in eMBB slice, an FMCF might be responsible for multiple NFs or NF chains whose components can span across multiple VICs and physical servers with many inter-dependencies among infrastructure layers where fault localization and isolation might be more complicated and thus take longer time. In such a case of more relaxed resiliency and fault recovery requirements, the FMCF might be designed to react only on specific alarms/events that can seriously jeopardize the service fulfillment.

Furthermore, the FMCF aims at consolidated fault detection on all layers of the network slice that can experience the fault, i.e. physical, virtual, functional layers by considering the inputs from all the layers jointly. Optionally the different layers can be treated separately by dedicated layer-specific FMCFs. The distribution of FMCFs and their concrete implementation and mapping with the network functions is done in a way to maximize the potential for fault localization and isolation, and thus self-healing (taking into account the service/slice resiliency requirements).

The CNM is responsible for exact configuration of FMCFs. The CNM decides on the FMCF configuration and mapping to network function or multiple of network functions according to the slice and NF specifics (in terms of resilience and self-healing/recovery requirements) as well as agreed SLAs with the tenant. Additionally, the CNM can learn from previous network and FMCF configurations and corresponding network performance and response to faults.

Furthermore, based on handled FM events and ability to localize, isolate and resolve the occurred issue, the FMCF can give a feedback to the NSMF (in particular to Orchestration process) in order to improve the placement/deployment of NFs into the virtual and physical infrastructure. E.g. in case of very critical control network function which components were deployed on multiple VICs and physical servers, which makes the fault detection as well as fault isolation difficult, the FMCF of that network function might recommend to the NSMF/Orchestrator to deploy the NF differently, e.g. on the same physical server. Another example is the case where very critical control function of URLLC slice is deployed on the same VIC or physical server as another network function that can be prone to fault or security threads and does not inherently contain the mechanism for fault mitigation. Due to the deployment on shared infrastructure the function with stringent resiliency, availability and/or reliability requirements can be affected by the faults caused by other network functions. Such faults caused by other network function can be either result of the nature/type of network functions, more relaxed resiliency requirements and corresponding fault mitigation mechanisms.

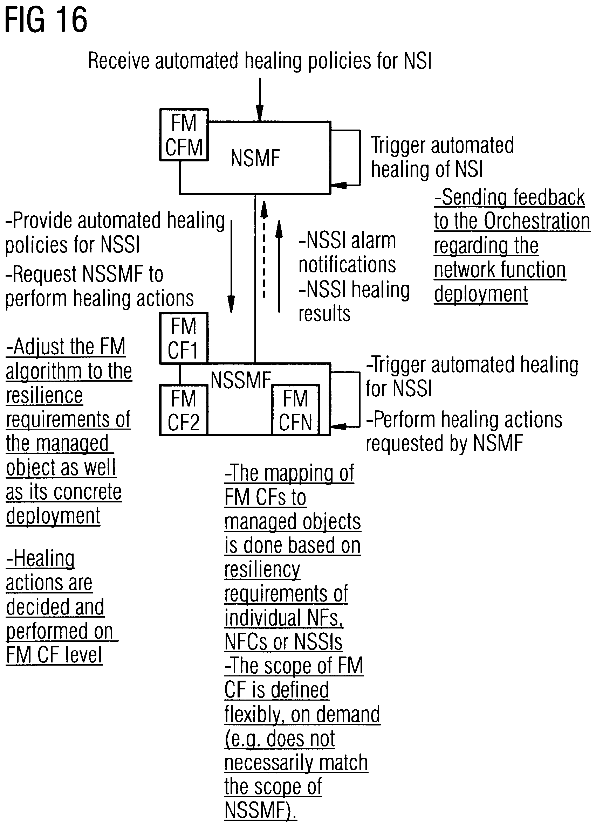

As shown in Fig. 16, some embodiments of the invention provide a network slicing capable communication network (e.g. a mobile network comprising radio access network RAN, core network CN, transport network functionality) or a part thereof, as well as a network management and orchestration system, performing part of the network functionality.

Therein, Fault Management is performed in a modular/distributed slice-aware way through a set of Fault Management Cognitive Functions (FMCFs) which have one or more of the following capabilities:
- Performance and Fault Data collection and processing
- Anomaly detection (targeting also anomaly prediction)
- Anomaly diagnosis, localization and root cause analysis
- Fault isolation and recovery/healing.

The logic of FMCFs, i.e. the algorithm in addition to operational policies, is use-case specific and defined flexibly based on among others at least one of the following inputs:
- Slice requirements, e.g. in terms of resiliency, availability, reliability, required responsiveness to fault events, latency, etc.
- Agreed SLAs with the tenant
- Type of the network function e.g. user or control plane, centralized controller in particular with respect to required resiliency e.g.:
   ∘ in terms of required level of redundancy
   ∘ required time for restoration in the case of fault
- Affinity among network functions e.g. if NFs are usually appearing together in the service function chain or if the output of one function is the direct input of the other function

The scope of FMCF for which the FMCF is responsible (e.g. the set of network functions, or individual network function, or separate deployment layers of individual network function) is use-case specific and defined flexibly based on e.g. at least one of the following inputs:
- Slice requirements, e.g. in terms of resiliency, availability, reliability, required responsiveness to fault events, latency, etc.
- Agreed SLAs with the tenant
- Type of the network function e.g. user or control plane, centralized controller in particular with respect to required resiliency e.g.:
   ∘ in terms of required level of redundancy
   ∘ required time for restoration in the case of fault
- Affinity among network functions e.g. if NFs are usually appearing together in the service function chain or if the output of one function is the direct input of the other function
- Deployment characteristics of the network functions in terms of the mapping between physical, virtual and functional layers
- Potential ability to timely localize and isolate the faults in the network based on network function(s) deployment

Based on handled FM events and ability to localize, isolate and resolve the occurred issue the FMCF can give a feedback to the NSMF/Orchestration process in order to improve the placement/deployment of NFs into the virtual and physical infrastructure

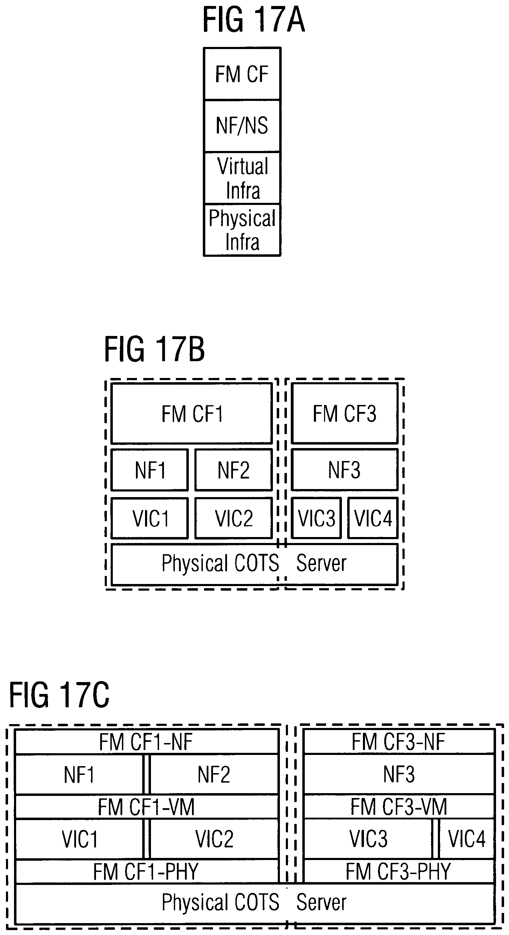

Figure 17a) illustrates the layered view of the network service implementation in a virtualized environment. The network service (NS) may consist of multiple network functions (NFs) that are implemented on the virtual and physical infrastructure. The fault management operations of the NS/NFs are handled by the FMCFs which are part of CNM system and can be centralized or distributed depending on the NS/NF that they manage. Figure 17b) shows one possible implementation of FMCFs responsible for managing three network functions as well as corresponding mapping to the virtual and physical infrastructure on which NFs are deployed. In this concrete example of mapping between FMCF, NF, and the infrastructure, it is noticeable that due to multiple overlaps in the layers mapping (e.g. both NF2 and NF3 components are implemented on the same servers from the physical infrastructure point of view) a single FMCF, in order to perform the fault localization and isolation, needs to correlate the performance indicators and alarms related to different layers of the infrastructure as well as to exclude the input that might be related to the NF3 which is not under the responsibility of FMCF 1.

Alternatively, the FMCFs can be built up of layer-specific FMCFs which scope of operation is limited to a specific deployment layer (e.g. physical or virtual, see Fig. 17c)). Such layer-specific FMCFs can to a certain extent autonomously act within a dedicated layer e.g. in the case of physical NIC outage the physical layer FMCF can automatically trigger the switching of traffic to another NIC. However, all layer-specific FMCFs should exchange the info about dedicated layer with the FMCFs of other layers and/or with the FMCF of the network function to which the layer-specific FMCFs are related to.

In the context of network slicing, the fault isolation and consequently self-healing might be more difficult, as different NFs might be designed with different resiliency considerations/requirements, therefore the overlaps in layers mapping might complicate the timely fulfillment of all such requirements. E.g. some NFs require more resiliency due to their role in the network such as control vs user plane NFs, or the required time for restoration for network functions that build up the time critical network slice versus latency tolerant network service.

By intelligently assigning the FMCF to the network function based on different input parameters the fault localization as well as isolation can be improved. Each FMCF can implement different fault algorithms for fault correlation, localization and isolation which can be also adapted based on the environment and/or the network context and learned experience. The input parameters that influence the design of FMCF may be e.g.:
- Slice requirements, e.g. in terms of resiliency, latency
- Agreed SLAs with the tenant
- Type of the network function e.g. user or control plane
- Resiliency requirement of the network function, e.g. in terms of required level of redundancy or required time for restoration in the case of fault
- Affinity among network functions e.g. if NFs are usually appearing together in the service function chain or if the output of one function is the direct input of the other function
- Deployment characteristics of the network functions in terms of the mapping between physical, virtual and functional layers

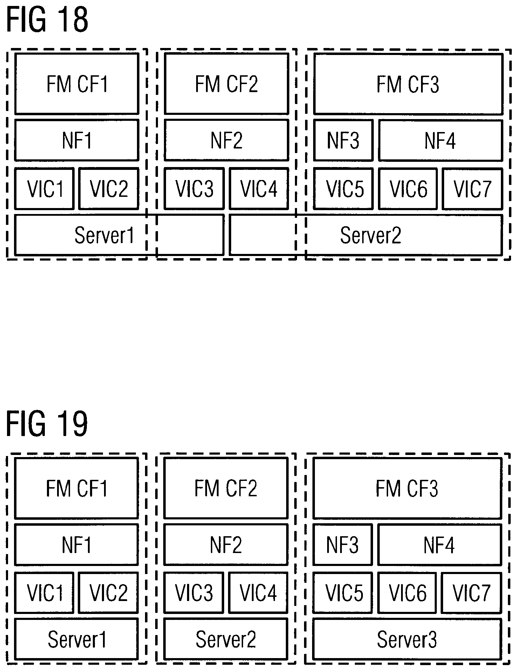

Fig. 18 illustrates the case where FMCFs can implement the fault management algorithms tailored to the NFs (a single NF or a group of NFs with a similar resiliency requirements) they are managing and self-healing can be done on virtual infrastructure level as VMs on which one NF is deployed can be easily isolated without affecting other NFs. E.g. if the fault happens on the virtualization level of NF1 the self-healing will be done on this level without affecting the NF2 and NF3.

Similarly, Fig. 19 illustrates the case where the FMCFs can implement NF-tailored FM algorithms and isolation can be done on physical infrastructure level as well, e.g. self-healing or isolation of NF2 either on virtual of physical level will not affect NF1 and NF3.

As a concept of FMCFs build upon CNM concept, distributed, centralized or hybrid implementations are possible for FMCFs.

The advantage of highly distributed implementation of FMCFs is better responsiveness to NF faults both in terms of applying more adequate algorithms for specific type of network function (or a group of NFs with same/similar resiliency requirements) and its implementation as well as in terms or more local processing of fault indicators and thus faster reaction to faulty events. On the other hand, the FMCFs cannot work independently from each other due to many dependencies among network functions and overlapping deployments in the underlying infrastructure which would lead into colliding decisions at the FMCFs. Therefore, a highly distributed implementation of FMCFs would require either a high level of interaction between FMCFs or the existence of coordination point for consolidation of FMCFs operation. The corresponding interfaces between FMCFs and coordination point as well as among FMCFs should be defined (e.g. by 3GPP) in order to allow for a (standardised) exchange of data.

By more centralized implementation of FMCF concept (e.g. merging the different FMCFs into a single one) such interaction becomes less critical as decisions are taken centrally, but the flexibility and adaptability of such implementation becomes lower.

Due to aforementioned tradeoffs between distributed and centralized approaches neither a fully distributed nor a fully centralized implementation for FMCFs are optimal. The exact implementation i.e. the level of centralization/distribution of FMCFs depends on the use case, e.g. slice characteristics in terms of required responsiveness to faults and resulting achieved latency and reliability.

### Component Implementations:

Hereinafter, CNM components to implement the concept of FMCFs are described, see Fig. 15. An assumption is that the slice requirements especially in terms of resilience and reliability are derived by the CSMF (Communication Service Management Function) and communicated via the NSMF (Network Slice Management Function) [1].

### Environment Modelling & Abstraction (EMA):

This module is responsible for providing the network context and environment information (e.g., network performance information/KPIs, time of the day, geographical location, user density) which is important as an input for selecting the most appropriate model for fault management. Moreover, this module might give an information about mapping between functional and infrastructure layers during the NF deployment. Furthermore, the EMA might take into consideration the abstraction of network slice characteristics especially in terms of reliability requirements.

By centralization of network context and environment modeling a more holistic view could be achieved, i.e. a view on slice requirements along with individual NFs requirements and their prioritization with respect to overall network slice, as well as the holistic view on the NF implementations.

### Configuration Management Engine (CME):

The Configuration Management Engine (CME) manages the internal state space for all CFs and consequently FMCFs. It is responsible for updating the set of possible (legal) network configurations/algorithms running on each FMCF based on information provided by EMA. Centralizing this entity enables more informed decisions due to a broader information set available.

### Decision & Action Engine (DAE):

The Decision & Action Engine (DAE) finally chooses one concrete configuration for FMCF based on available configurations provided by CME as well as context information provided by EMA. Furthermore, it learns the best configurations for FMCFs for specific network states and specific slice and NF requirements by collecting the feedback from FMCFs with respect to their efficiency in fault localization and isolation especially with respect to mapping between infrastructure and functional layers and slice context abstracted by EMA.

Having such information, the DAE can learn the most suitable configuration of FMCFs with respect to slice and NF context. In order to allow more flexibility, the DAE may be distributed (e.g., implemented at the network element, e.g. the eNodeB).

### Coordination Engine (CE):

The Coordination Engine (CE) may 1) learn the effects of self-healing decisions of different FMCF 2) identify the collision points in terms of impact on slice performance 3) suggest modifications to the CME and DAE in order to minimize the collisions that degrade the slice performance, taking into account the priorities among slices.

In order to have an overview of existing slices and associated network functions along with their requirements and priorities, on one hand, and deployed FMCFs along with effects of their operation on deployed slices on the other hand the CE may be centralized.

### Interfaces

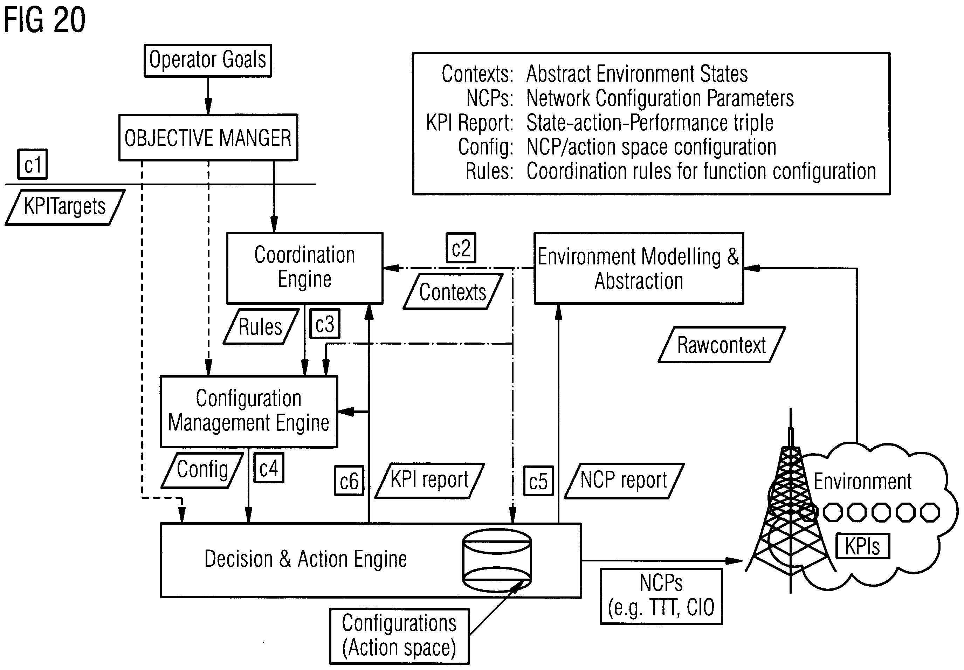

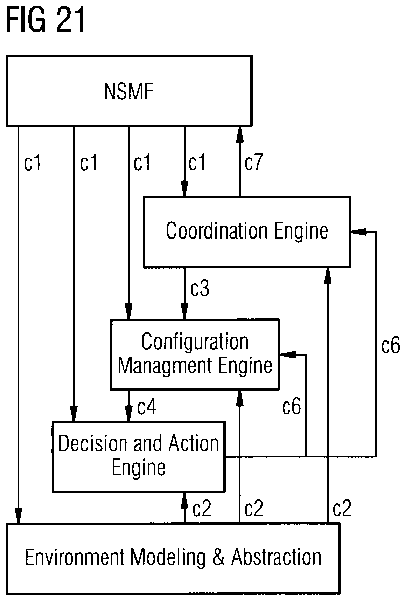

The components of CNM system need to interact with each other via a set of interfaces, see Figs. 20 and 21. Herein, additional information is indicated that may be transferred over these interfaces due to specific use case of slice-aware FMCFs as well as additional interfaces that may be used for realization of slice-aware FMCFs.

Table 1 gives a description of additional information that may be shared across interfaces known for CNM along with the description of new interfaces for realization of FMCFs system.

**Table 1: Interface descriptions**

| Interface | From | To | Description |
|---|---|---|---|
| c1 | NSMF | - CE | c1 provides the KPI targets expected to be achieved by the FMCFs in terms of e.g. outage probability or healing time for NSSI, NFCs, individual NFs and specific deployment layers of individual NFs, probability of fault propagation affecting other NSSIs and NFs etc. Additionally, the priorities of KPI targets will be provided with respect to other KPIs of a specific slice as well as priorities with respect to cross-slice implementation. |
| | | - CME | |
| | | - DAE | |
| | | - EMA | |
| c2 | EMA | - CE | c2 provides the environment states and/or contexts with respect to slices deployed in the network. In particular, the EMA may provide the network state on aggregated level i.e. jointly for all deployed slices as well as the network states and context with respect to individual slices and their requirements. |
| | | - CME | |
| | | - DAE | |
| c3 | CE | CME | c3 provides the potential options for FMCF deployments (e.g. to which NSI, NSSI, NFC, NF, physical or virtual layer the FMCF will be mapped) as well as descriptions of potential effects of one FMCF to another FMCF within a single network slice and across multiple network slices implementing different service requirements and having different priorities. Having such information the CME decides how to configure the set of legal candidate network configurations of a FMCF in a way that minimizes the mutual negative impact of FMCF actions while maximizing the overall performance (in the framework of slice requirements). |
| c4 | CME | DAE | c4 provides the CME actual set of configurations that can be applied to specific FMCF. Such a set of configurations represents a selection from all possible legal candidate configurations. The selection is done based on current network state and context as well as previously learned best fitting configurations in terms of network performance. |
| c6 | DAE | - CME | C6 carries the reports on the network performance mapping between selected FMCF configurations and the corresponding network KPls. This information may be mapped with the network context and in particular to slice requirements and agreed SLAs in order to derive the conclusions on the best fitting configurations and to learn them. Additionally, the recommendation on FMCF deployment can be communicated based on ability to perform required troubleshooting with respect to mapping of FMCF to the managed object. |
| | | - CE | |
| c7 | CE | NSMF | Abstracted performance reports can be sent back to NSMF as an update on fulfillment of slice requirements and agreed SLAs |

In a summary, the following features may be particularly relevant for FMCF according to some embodiments of the invention:
- the c1 interface may involve NSMF function defined in 3GPP TR 28.801 [1],
- all interfaces may carry the FMCF use case specific information
- c5 interface may be less relevant as this communication is largely covered by c6
- additional c7 interface may be used for reporting back to NSMF on more abstracted level

The described approach would improve the fault management and consequently the resilience and reliability of the network service. The FMCFs may be designed in a way to meet the service resilience requirements while simplifying the overall network operation by exploiting the information on the network service deployment. The scope as well as logic of FMCF should be carefully mapped with the resiliency requirements of the object (NF, NF chains, NSSI, NSI) that it is managing as well as its deployment into physical and virtual infrastructure and mutual dependencies between objects and deployment layers.

As a part of the CNM framework the decision on the FMCF (FMCF being one example of CF) deployment and logic may be done in an automated process. The steps required for fulfilling such process may be the following:
1. The NSMF having the network slice (NSI) related requirements can derive corresponding NSSI requirements (as described in 3GPP TR 28.801 [1]). The reliability and resiliency related requirements (i.e. Fault management requirement) are one part of overall NSI/NSSI requirements and are communicated to CE, CME, DAE as well as EMA.
2. Such requirements can be broken down further to the individual NFCs and NF requirements
3. The EMA module, being aware of available slices and their requirements may report on environment states and/or contexts with respect to slices deployed in the network. Such environmental and contextual information may be communicated to CE, CME and DAE.
4. Based on received information (from NSMF and EMA) CE may provision the potential FMCF deployments as well as effects of one FMCF to another FMCF within a single network slice and across multiple network slices implementing different service requirements and having different priorities. *Note: NSMF, EMA and CE may have an overview of information related to multiple slices that are concurrently deployed in the network, whereas CME and DAE have "local view" on a specific FMCF mapped to NSI, NSSI, NFC or NFs of a single slice.*
5. Based on inputs from NSSF, EMA and CE the CME decides how to deploy the FMCF in terms of mapping its logic and scope to a certain managed object(s) and to configure the set of legal candidate network configurations of a FMCF in a way that minimizes the mutual negative impact of FMCF actions while fulfilling the requirements of a specific network slice in which FMCF is operating.
6. Finally, the DAE may select the most appropriate configuration for FMCF. The selection is done based on current network state and context as well as previously learned best fitting configurations in terms of network performance.

## Claims

1. An apparatus, comprising:
a first monitoring unit configured to monitor if a notification of a first event is received from a first network resource;
a first managing unit configured to manage the first network resource based on the first event if the first monitoring unit monitors that the notification of the first event is received;
a second monitoring unit configured to monitor if a notification of a root event is received from a second network resource different from the first network resource;
a second managing unit configured to manage the second network resource based on the root event if the second monitoring unit monitors that the notification of the root event is received; and
a forwarding unit configured to forward the notification of the root event to the first network resource if the second monitoring unit monitors that the notification of the root event is received.

2. The apparatus according to claim 1, further comprising an event correlation unit configured to correlate the first event and the root event to obtain a correlated event;
and wherein at least one of the first managing unit and the second managing unit is configured to manage the first network resource and the second network resource, respectively, based on the correlated event.

3. An apparatus, comprising:
a first monitoring unit configured to monitor if a first instruction is received from a first management function;
a second monitoring unit configured to monitor if a second instruction is received from a second management function different from the first management function;
a managing unit configured to manage a first network resource based on the first instruction if the first instruction is received and based on the second instruction if the second instruction is received;
an event monitoring unit configured to monitor if a notification of a root event is received from the second management function; and
a forwarding unit configured to forward the notification of the root event to the first management function if the notification of the root event is received from the second management function.

4. The apparatus according to claim 3, further comprising a third monitoring unit configured to monitor if a notification of a first event is received from the first network resource;
and wherein the managing unit is configured to manage the first network resource based on the first event if the third monitoring unit monitors that the notification of the first event is received.

5. The apparatus according to claim 4, further comprising an event correlation unit configured to correlate the first event and the root event to obtain a correlated event;
and wherein the managing unit is configured to manage the first network resource based on the correlated event.

6. An apparatus, comprising:
a first monitoring unit configured to monitor if a notification of a first event relating to a first network resource is received and to monitor if a notification of a root event relating to a second network resource is received; and
a first managing unit configured to manage the first network resource based on the first event if the first monitoring unit monitors that the notification of the first event is received;
wherein:
the second network resource is different from the first network resource;
the first managing unit is further configured to manage the first network resource based on the root event if the first monitoring unit monitors that the notification of the root event is received; and
the first managing unit is not configured to manage the second network resource.

7. The apparatus according to claim 6, further comprising an event bus;
and wherein:
the first network resource is configured to provide the notification of the first event directly or indirectly to the event bus;
the second network resource is configured to provide the notification of the root event directly or indirectly to the event bus; and
the first managing unit is subscribed to receive the notification of the first event and the notification of the root event from the event bus.

8. The apparatus according to claim 7, wherein the first resource is configured to provide the notification of the first event to a first managing function and/or the second resource is configured to provide the notification of the root event to a second managing function different from the first managing function;
and wherein:
the first managing unit is configured to receive the notification of the first event, to manage the first network resource based on the first event, and to forward the notification of the first event to the event bus; and
the second managing unit is configured to receive the notification of the root event, to manage the second network resource based on the root event, and to forward the notification of the root event to the event bus.

9. The apparatus according to any one of claims 6 to 8, further comprising an event correlation unit configured to correlate the first event and the root event to obtain a correlated event;
and wherein the first managing unit is configured to manage the first network resource based on the correlated event.

10. The apparatus according to any of the preceding claims, wherein at least one of the first network resource and the second network resource is a network slice instance or a network slice subnet instance.

11. A method, comprising:
monitoring if a notification of a first event is received from a first network resource;
managing the first network resource based on the first event if the first monitoring unit monitors that the notification of the first event is received;
monitoring if a notification of a root event is received from a second network resource different from the first network resource;
managing the second network resource based on the root event if the second monitoring unit monitors that the notification of the root event is received; and
forwarding the notification of the root event to the first network resource if it is monitored that the notification of the root event is received.

12. The method according to claim 11, further comprising correlating the first event and the root event to obtain a correlated event;
and wherein
at least one of the managing the first network resource and the managing the second network resource comprises managing the first network resource or managing the second network resource, respectively, based on the correlated event.

13. A method, comprising:
monitoring if a first instruction is received from a first management function;
monitoring if a second instruction is received from a second management function different from the first management function;
managing a first network resource based on the first instruction if the first instruction is received and based on the second instruction if the second instruction is received;
monitoring if a notification of a root event is received from the second management function; and
forwarding the notification of the root event to the first management function if the notification of the root event is received from the second management function.

14. A method, comprising:
monitoring if a notification of a first event relating to a first network resource is received and monitoring if a notification of a root event relating to a second network resource is received; and
managing, by a first managing unit, the first network resource based on the first event if it is monitored that the notification of the first event is received;
wherein:
the second network resource is different from the first network resource;
the first network resource is managed by the first managing unit based on the root event if it is monitored that the notification of the root event is received;
the first managing unit does not manage the second network resource.

15. A computer program product comprising instructions which, when executed by a computer, cause the computer to carry out a method according to any one of claims 11 to 14.

## Patentansprüche

1. Vorrichtung, die Folgendes umfasst:
eine erste Überwachungseinheit, die dazu ausgelegt ist zu überwachen, ob eine Benachrichtigung über ein erstes Ereignis von einer ersten Netzwerkressource empfangen wurde;
eine erste Verwaltungseinheit, die dazu ausgelegt ist, die erste Netzwerkressource auf Basis des ersten Ereignisses zu verwalten, wenn die erste Überwachungseinheit überwacht, dass die Benachrichtigung über das erste Ereignis empfangen wurde;
eine zweite Überwachungseinheit, die dazu ausgelegt ist zu überwachen, ob eine Benachrichtigung über ein Stammereignis von einer zweiten Netzwerkressource empfangen wurde, die sich von der ersten Netzwerkressource unterscheidet;
eine zweite Verwaltungseinheit, die dazu ausgelegt ist, die zweite Netzwerkressource auf Basis des Stammereignisses zu verwalten, wenn die zweite Überwachungseinheit überwacht, dass die Benachrichtigung über das Stammereignis empfangen wurde; und
eine Weiterleitungseinheit, die dazu ausgelegt ist, die Benachrichtigung über das Stammereignis an die erste Netzwerkressource weiterzuleiten, wenn die zweite Überwachungseinheit überwacht, dass die Benachrichtigung über das Stammereignis empfangen wurde.

2. Vorrichtung nach Anspruch 1, die ferner eine Ereigniskorrelationseinheit umfasst, die dazu ausgelegt ist, das erste Ereignis und das Stammereignis zu korrelieren, um ein korreliertes Ereignis zu erhalten;
und wobei mindestens eine der ersten Verwaltungseinheit und der zweiten Verwaltungseinheit dazu ausgelegt ist, die erste Netzwerkressource bzw. die zweite Netzwerkressource auf Basis des korrelierten Ereignisses zu verwalten.

3. Vorrichtung, die Folgendes umfasst:
eine erste Überwachungseinheit, die dazu ausgelegt ist zu überwachen, ob eine erste Anweisung von einer ersten Verwaltungsfunktion empfangen wurde;
eine zweite Überwachungseinheit, die dazu ausgelegt ist zu überwachen, ob eine zweite Anweisung von einer zweiten Verwaltungsfunktion empfangen wurde, die sich von der ersten Verwaltungsfunktion unterscheidet;
eine Verwaltungseinheit, die dazu ausgelegt ist, eine erste Netzwerkressource auf Basis der ersten Anweisung zu verwalten, wenn die erste Anweisung empfangen wurde, und auf Basis der zweiten Anweisung, wenn die zweite Anweisung empfangen wurde;
eine Ereignisüberwachungseinheit, die dazu ausgelegt ist zu überwachen, ob eine Benachrichtigung über ein Stammereignis von der zweiten Verwaltungsfunktion empfangen wurde; und
eine Weiterleitungseinheit, die dazu ausgelegt ist, die Benachrichtigung über das Stammereignis an die erste Verwaltungsfunktion weiterzuleiten, wenn die Benachrichtigung über das Stammereignis von der zweiten Verwaltungsfunktion empfangen wurde.

4. Vorrichtung nach Anspruch 3, die ferner eine dritte Überwachungseinheit umfasst, die dazu ausgelegt ist zu überwachen, ob eine Benachrichtigung über ein erstes Ereignis von der ersten Netzwerkressource empfangen wurde;
und wobei die Verwaltungseinheit dazu ausgelegt ist, die erste Netzwerkressource auf Basis des ersten Ereignisses zu verwalten, wenn die dritte Überwachungseinheit überwacht, dass die Benachrichtigung über das erste Ereignis empfangen wurde.

5. Vorrichtung nach Anspruch 4, die ferner eine Ereigniskorrelationseinheit umfasst, die dazu ausgelegt ist, das erste Ereignis und das Stammereignis zu korrelieren, um ein korreliertes Ereignis zu erhalten;
und wobei die Verwaltungseinheit dazu ausgelegt ist, die erste Netzwerkressource auf Basis des korrelierten Ereignisses zu verwalten.

6. Vorrichtung, die Folgendes umfasst:
eine erste Überwachungseinheit, die dazu ausgelegt ist zu überwachen, ob eine Benachrichtigung über ein erstes Ereignis, das eine erste Netzwerkressource betrifft, empfangen wurde, und zu überwachen, ob eine Benachrichtigung über ein Stammereignis, das eine zweite Netzwerkressource betrifft, empfangen wurde; und
eine erste Verwaltungseinheit, die dazu ausgelegt ist, die erste Netzwerkressource auf Basis des ersten Ereignisses zu verwalten, wenn die erste Überwachungseinheit überwacht, dass die Benachrichtigung über das erste Ereignis empfangen wurde;
wobei:
die zweite Netzwerkressource sich von der ersten Netzwerkressource unterscheidet;
die erste Verwaltungseinheit ferner dazu ausgelegt ist, die erste Netzwerkressource auf Basis des Stammereignisses zu verwalten, wenn die erste Überwachungseinheit überwacht, dass die Benachrichtigung über das Stammereignis empfangen wurde; und
die erste Verwaltungseinheit nicht dazu ausgelegt ist, die zweite Netzwerkressource zu verwalten.

7. Vorrichtung nach Anspruch 6, die ferner einen Ereignisbus umfasst;
und wobei:
die erste Netzwerkressource dazu ausgelegt ist, dem Ereignisbus die Benachrichtigung über das erste Ereignis direkt oder indirekt bereitzustellen;
die zweite Netzwerkressource dazu ausgelegt ist, dem Ereignisbus die Benachrichtigung über das Stammereignis direkt oder indirekt bereitzustellen; und
die erste Verwaltungseinheit zum Empfangen der Benachrichtigung über das erste Ereignis und der Benachrichtigung über das Stammereignis vom Ereignisbus registriert ist.

8. Vorrichtung nach Anspruch 7, wobei die erste Ressource dazu ausgelegt ist, die Benachrichtigung über das erste Ereignis einer ersten Verwaltungsfunktion bereitzustellen, und/oder die zweite Ressource dazu ausgelegt ist, die Benachrichtigung über das Stammereignis einer zweiten Verwaltungsfunktion bereitzustellen, die sich von der ersten Verwaltungsfunktion unterscheidet;
und wobei:
die erste Verwaltungseinheit dazu ausgelegt ist, die Benachrichtigung über das erste Ereignis zu empfangen, die erste Netzwerkressource auf Basis des ersten Ereignisses zu verwalten und die Benachrichtigung über das erste Ereignis an den Ereignisbus weiterzuleiten; und
die zweite Verwaltungseinheit dazu ausgelegt ist, die Benachrichtigung über das erste Stammereignis zu empfangen, die zweite Netzwerkressource auf Basis des Stammereignisses zu verwalten und die Benachrichtigung über das Stammereignis an den Ereignisbus weiterzuleiten.

9. Vorrichtung nach einem der Ansprüche 6 bis 8, die ferner eine Ereigniskorrelationseinheit umfasst, die dazu ausgelegt ist, das erste Ereignis und das Stammereignis zu korrelieren, um ein korreliertes Ereignis zu erhalten;
und wobei die erste Verwaltungseinheit dazu ausgelegt ist, die erste Netzwerkressource auf Basis des korrelierten Ereignisses zu verwalten.

10. Vorrichtung nach einem der vorhergehenden Ansprüche, wobei mindestens eine der ersten Netzwerkressource und der zweiten Netzwerkressource eine Netzwerksliceinstanz oder eine Netzwerkslicesubnetzinstanz ist.

11. Verfahren, das Folgendes umfasst:
Überwachen, ob eine Benachrichtigung über ein erstes Ereignis von einer ersten Netzwerkressource empfangen wurde;
Verwalten der ersten Netzwerkressource auf Basis des ersten Ereignisses, wenn die erste Überwachungseinheit überwacht, dass die Benachrichtigung über das erste Ereignis empfangen wurde;
Überwachen, ob eine Benachrichtigung über ein Stammereignis von einer zweiten Netzwerkressource empfangen wurde, die sich von der ersten Netzwerkressource unterscheidet;
Verwalten der zweiten Netzwerkressource auf Basis des Stammereignisses, wenn die zweite Überwachungseinheit überwacht, dass die Benachrichtigung über das Stammereignis empfangen wurde; und
Weiterleiten der Benachrichtigung über das Stammereignis an die erste Netzwerkressource, wenn überwacht wird, dass die Benachrichtigung über das Stammereignis empfangen wurde.

12. Verfahren nach Anspruch 11, das ferner das Korrelieren des ersten Ereignisses und des Stammereignisses umfasst, um ein korreliertes Ereignis zu erhalten;
und wobei
mindestens eines des Verwaltens der ersten Netzwerkressource und des Verwaltens der zweiten Netzwerkressource das Verwalten der ersten Netzwerkressource bzw. das Verwalten der zweiten Netzwerkressource auf Basis des korrelierten Ereignisses umfasst.

13. Verfahren, das Folgendes umfasst:
Überwachen, ob eine erste Anweisung von einer ersten Verwaltungsfunktion empfangen wurde;
Überwachen, ob eine zweite Anweisung von einer zweiten Verwaltungsfunktion empfangen wurde, die sich von der ersten Verwaltungsfunktion unterscheidet;
Verwalten einer ersten Netzwerkressource auf Basis der ersten Anweisung, wenn die erste Anweisung empfangen wurde, und auf Basis der zweiten Anweisung, wenn die zweite Anweisung empfangen wurde;
Überwachen, ob eine Benachrichtigung über ein Stammereignis von der zweiten Verwaltungsfunktion empfangen wurde; und
Weiterleiten der Benachrichtigung über das Stammereignis an die erste Verwaltungsfunktion, wenn die Benachrichtigung über das Stammereignis von der zweiten Verwaltungsfunktion empfangen wurde.

14. Verfahren, das Folgendes umfasst:
Überwachen, ob eine Benachrichtigung über ein erstes Ereignis, das eine erste Netzwerkressource betrifft, empfangen wurde, und Überwachen, ob eine Benachrichtigung über ein Stammereignis, das eine zweite Netzwerkressource betrifft, empfangen wurde; und
Verwalten der ersten Netzwerkressource durch eine erste Verwaltungseinheit auf Basis des ersten Ereignisses, wenn überwacht wird, dass die Benachrichtigung über das erste Ereignis empfangen wurde;
wobei:
die zweite Netzwerkressource sich von der ersten Netzwerkressource unterscheidet;
die erste Netzwerkressource von der Verwaltungseinheit auf Basis des Stammereignisses verwaltet wird, wenn überwacht wird, dass die Benachrichtigung über das Stammereignis empfangen wurde; die erste Verwaltungseinheit die zweite Netzwerkressource nicht verwaltet.

15. Computerprogrammprodukt, das Anweisungen umfasst, die, wenn sie von einem Computer ausgeführt werden, den Computer veranlassen, ein Verfahren nach einem der Ansprüche 11 bis 14 umzusetzen.

## Revendications

1. Appareil, comprenant :
une première unité de vérification configurée pour vérifier si une notification d'un premier événement est reçue d'une première ressource de réseau ;
une première unité de gestion configurée pour gérer la première ressource de réseau sur la base du premier événement si la première unité de vérification vérifie que la notification du premier événement est reçue ;
une deuxième unité de vérification configurée pour vérifier si une notification d'un événement racine est reçue d'une deuxième ressource de réseau différente de la première ressource de réseau ;
une deuxième unité de gestion configurée pour gérer la deuxième ressource de réseau sur la base de l'événement racine si la deuxième unité de vérification vérifie que la notification de l'événement racine est reçue ; et
une unité de transfert configurée pour transférer la notification de l'événement racine à la première ressource de réseau si la deuxième unité de vérification vérifie que la notification de l'événement racine est reçue.

2. Appareil selon la revendication 1, comprenant en outre une unité de corrélation d'événements configurée pour corréler le premier événement et l'événement racine pour obtenir un événement corrélé ;
et dans lequel au moins une parmi la première unité de gestion et la deuxième unité de gestion est configurée pour gérer la première ressource de réseau et la deuxième ressource de réseau, respectivement, sur la base de l'événement corrélé.

3. Appareil, comprenant :
une première unité de vérification configurée pour vérifier si une première instruction est reçue d'une première fonction de gestion ;
une deuxième unité de vérification configurée pour vérifier si une deuxième instruction est reçue d'une deuxième fonction de gestion différente de la première fonction de gestion ;
une unité de gestion configurée pour gérer une première ressource de réseau sur la base de la première instruction si la première instruction est reçue et sur la base de la deuxième instruction si la deuxième instruction est reçue ;
une unité de vérification d'événement configurée pour vérifier si une notification d'un événement racine est reçue de la deuxième fonction de gestion ; et
une unité de transfert configurée pour transférer la notification de l'événement racine à la première fonction de gestion si la notification de l'événement racine est reçue de la deuxième fonction de gestion.

4. Appareil selon la revendication 3, comprenant en outre une troisième unité de vérification configurée pour vérifier si une notification d'un premier événement est reçue de la première ressource de réseau ;
et dans lequel l'unité de gestion est configurée pour gérer la première ressource de réseau sur la base du premier événement si la troisième unité de vérification vérifie que la notification du premier événement est reçue.

5. Appareil selon la revendication 4, comprenant en outre une unité de corrélation d'événements configurée pour corréler le premier événement et l'événement racine pour obtenir un événement corrélé ;
et dans lequel l'unité de gestion est configurée pour gérer la première ressource de réseau sur la base de l'événement corrélé.

6. Appareil, comprenant :
une première unité de vérification configurée pour vérifier si une notification d'un premier événement relatif à une première ressource de réseau est reçue et pour vérifier si une notification d'un événement racine relatif à une deuxième ressource de réseau est reçue ; et
une première unité de gestion configurée pour gérer la première ressource de réseau sur la base du premier événement si la première unité de vérification vérifie que la notification du premier événement est reçue ;
dans lequel :
la deuxième ressource de réseau est différente de la première ressource de réseau ;
la première unité de gestion est en outre configurée pour gérer la première ressource de réseau sur la base de l'événement racine si la première unité de vérification vérifie que la notification de l'événement racine est reçue ; et
la première unité de gestion n'est pas configurée pour gérer la deuxième ressource de réseau.

7. Appareil selon la revendication 6, comprenant en outre un bus d'événements ;
et dans lequel :
la première ressource de réseau est configurée pour fournir la notification du premier événement directement ou indirectement au bus d'événements ;
la deuxième ressource de réseau est configurée pour fournir la notification de l'événement racine directement ou indirectement au bus d'événements ; et
la première unité de gestion est inscrite pour recevoir, du bus d'événements, la notification du premier événement et la notification de l'événement racine.

8. Appareil selon la revendication 7, dans lequel la première ressource est configurée pour fournir la notification du premier événement à une première fonction de gestion, et/ou la deuxième ressource est configurée pour fournir la notification de l'événement racine à une deuxième fonction de gestion différente de la première fonction de gestion ;
et dans lequel :
la première unité de gestion est configurée pour recevoir la notification du premier événement, pour gérer la première ressource de réseau sur la base du premier événement, et pour transférer la notification du premier événement au bus d'événements ; et
la deuxième unité de gestion est configurée pour recevoir la notification de l'événement racine, pour gérer la deuxième ressource de réseau sur la base de l'événement racine, et pour transférer la notification de l'événement racine au bus d'événements.

9. Appareil selon l'une quelconque des revendications 6 à 8, comprenant en outre une unité de corrélation d'événements configurée pour corréler le premier événement et l'événement racine pour obtenir un événement corrélé ;
et dans lequel la première unité de gestion est configurée pour gérer la première ressource de réseau sur la base de l'événement corrélé.

10. Appareil selon l'une quelconque des revendications précédentes, dans lequel au moins une parmi la première ressource de réseau et la deuxième ressource de réseau est une instance de tranche de réseau ou une instance de sous-réseau de tranche de réseau.

11. Procédé, comprenant :
le fait de vérifier si une notification d'un premier événement est reçue d'une première ressource de réseau ;
la gestion de la première ressource de réseau sur la base du premier événement si la première unité de vérification vérifie que la notification du premier événement est reçue ;
le fait de vérifier si une notification d'un événement racine est reçue d'une deuxième ressource de réseau différente de la première ressource de réseau ;
la gestion de la deuxième ressource de réseau sur la base de l'événement racine si la deuxième unité de vérification vérifie que la notification de l'événement racine est reçue ; et
le transfert de la notification de l'événement racine à la première ressource de réseau si la vérification donne que la notification de l'événement racine est reçue.

12. Procédé selon la revendication 11, comprenant en outre la corrélation du premier événement et de l'événement racine pour obtenir un événement corrélé ;
et dans lequel
au moins une parmi la gestion de la première ressource de réseau et la gestion de la deuxième ressource de réseau comprend la gestion de la première ressource de réseau ou la gestion de la deuxième ressource de réseau, respectivement, sur la base de l'événement corrélé.

13. Procédé, comprenant :
le fait de vérifier si une première instruction est reçue d'une première fonction de gestion ;
le fait de vérifier si une deuxième instruction est reçue d'une deuxième fonction de gestion différente de la première fonction de gestion ;
la gestion d'une première ressource de réseau sur la base de la première instruction si la première instruction est reçue et sur la base de la deuxième instruction si la deuxième instruction est reçue ;
le fait de vérifier si une notification d'un événement racine est reçue de la deuxième fonction de gestion ; et
le transfert de la notification de l'événement racine à la première fonction de gestion si la notification de l'événement racine est reçue de la deuxième fonction de gestion.

14. Procédé, comprenant :
le fait de vérifier si une notification d'un premier événement relatif à une première ressource de réseau est reçue, et le fait de vérifier si une notification d'un événement racine relatif à une deuxième ressource de réseau est reçue ; et
la gestion, par une première unité de gestion, de la première ressource de réseau sur la base du premier événement si la vérification donne que la notification du premier événement est reçue ;
dans lequel :
la deuxième ressource de réseau est différente de la première ressource de réseau ;
la première ressource de réseau est gérée par la première unité de gestion sur la base de l'événement racine si la vérification donne que la notification de l'événement racine est reçue ;
la première unité de gestion ne gère pas la deuxième ressource de réseau.

15. Produit de programme informatique comprenant des instructions qui, lorsqu'elles sont exécutées par un ordinateur, amènent l'ordinateur à mettre en œuvre un procédé selon l'une quelconque des revendications 11 à 14.
